# EUROPEAN PATENT APPLICATION

(11) **EP 3 967 963 A1**
(43) Date of publication of application: **16.03.2022**
(21) Application number: 20801675.8
(22) Date of filing: 28.04.2020
(51) Int. Cl.: F28G 1/16, F22B 21/26, F24H 1/43

(54) **TUBULAR BOILER WITH INCORPORATED OVEN**

(30) Priority: 08.05.2019 ES 201930751 U
(71) Applicant: Mas Sanz, Xavier, 46015 Valencia (ES)
(72) Inventor: Mas Sanz, Xavier, 46015 Valencia (ES)
(74) Representative: Ungria López, Javier
(86) International application number: PCT/ES2020/070272
(87) International publication number: WO 2020/225465

(57) **Abstract**

The invention relates to a tubular boiler with a heat exchange tube (1) with at least one helical layer situated in a heat exchange chamber (5), and which comprises a set of laterally joined spirals. The boiler comprises, an inner side of the helical layer, an oven (3) that is rigidly joined to said layer and connected to a feeder (4) by means of which fuel is supplied. The boiler also comprises an output collector (2) for collecting ash and slag, which connects the inside of the heat exchange chamber (5) to the outside of the boiler, and a forced-air-current generator (6) that generates a movement of air (102) inside the boiler and directs it to the oven (3). This movement of air (102) moves the ash and slag along the at least one helical layer to the output collector (2).

## Description

### FIELD AND OBJECT OF THE INVENTION

The present invention is applicable in any industrial process that requires the production of heat energy generation by means of fuels with a significant ash or slag content, more especially for application thereof in the event that the arrangement of the boiler heat exchange body must be oriented in a horizontal position, due to installation requirements or limitations, also having application in boilers oriented in a vertical direction.

The invention proposes a boiler in which, the oven in which se produce the combustion, is situated inside the coil of said boiler, in a coaxial manner, such that the elimination of the slag and of the ash from the inside of the boiler is performed by applying a rotary movement to the boiler and utilizing the movement of inlet air, moving said slag or ash to an output collector.

### BACKGROUND OF THE INVENTION

At present, the existence of tubular boilers equipped with coil-shaped conduits, forming helical structures oriented in a vertical or horizontal position is known.

In the operation of these boilers, the heat exchange fluid, such as water or oil, passes through the inside of the coil conduits where the hot gases produced in the combustion are in contact to the outside faces of said conduits, which are heated, obtaining high temperatures and pressures with a high performance and a small volume of fluid.

This fluid that passes through the inside of the conduits to be heated requires an adequate quality to avoid encrustations inside these conduits which may affect the operation of the boiler, being susceptible to the resulting pressure and load fluctuations.

Moreover, the process carried out in these boilers requires a complex and costly maintenance, especially given the enormous drawback they present when solid fuels are used, generating slag and ash, particularly if said fuel is biomass.

As is known, the most widely used types of solid biomasses generate an amount of waste in the form of slag and ash that exceeds that of other solid fuels, and they furthermore have a lower melting point, so lower temperatures are reached during the exchange with the fluid.

Boilers using these fuels thereby require more maintenance than conventional boilers so that impurities and ashes do not affect the heat exchange, considerably reducing the efficacy, furthermore having a lower a performance by working in temperature regimes between 500 and 700 °C.

This problem is more pronounced in horizontally oriented boilers, since in vertical ones, the coil also being vertically oriented, the combustion direction favors the deposition of a large part of the ashes on the lower base of the tank by gravity, for a subsequent cleaning, while in the horizontal ones, the ashes fall on the coil itself without the possibility of removing them by conventional means.

As a result, improvements in this field are oriented at improving the heat exchange between the oven and the boiler and at removing the slag produced during combustion.

In the entire state of the art, the presence of a boiler similar to the one described in this invention, in which the oven generating the heat is situated inside the actual heat exchange coil, in the same heat exchange chamber of the boiler, such that heat exchange is the maximum heat exchange possible and the removal of ash and slag is performed by means of a rotary movement, does not exist.

### DESCRIPTION OF THE INVENTION

The solution presented by the invention is based on obtaining a boiler which unifies in a single unit an oven and a heat exchange chamber, creating a new configuration particularly devised for burning biomasses which require lower combustion temperatures, such as plant residues.

Therefore, despite the fact that these biomass fuels have a lower melting point than a conventional fuel, the manner of integrating the oven in the boiler improves the heat exchange, reduces the space needed to house the oven and, therefore, improves the efficiency of the assembly.

By combining both parts in a single unit, a very efficient piece of equipment that is considerably more cost-effective than conventional equipment is obtained, in addition to achieving a much smaller a size than installations used today and which are sometimes oversized for certain types of biomasses.

Given that the slag produced in these processes of burning biomass considerably reduces the performance of the equipment, the configuration of the parts making up said equipment ensures its optimal removal, preventing or reducing technical stoppages for cleaning and allowing an effective heat transfer with the coil through which the cooling fluid circulates.

Therefore, the tubular heat exchange boiler of the present invention comprises a heat exchange tube having a distribution comprising at least one helical layer, that is, with a coil shape, wherein said layer or layers comprise a set of laterally joined or adhered spirals, having a shape similar to that of a tension spring or that of a screw in which the thread pitch is defined by the inclination of each spiral with respect to the generatrix.

In the event that the heat exchange tube comprises two or more helical layers, these layers have different section sizes and are situated in a concentric and overlapping manner, that is, with each layer being inside another layer. Furthermore, the spirals of each helical layer of the heat exchange tube present a different inclination, with respect to the height of said layers, with said inclinations alternating in each layer. That is, in the innermost layer, all the spirals can have a positive inclination with respect to the height of the helix that defines the layer, or a clockwise pitch if it resembles a screw, and in the layer immediately there above enveloping the inner layer, they can all have a negative inclination or a counter-clockwise pitch, this successively being the case with the rest of the layers.

This helical layer or set of helical layers of the heat exchange tube can have a cylindrical shape or they can have a conical shape, having in this case, when there is more than one layer, alternating inverse tapering between each layer. That is because the helical shape, which defines the layers of the tube, can have an upper and lower diameter that defines it which are identical or different.

Therefore, both the one or more layers that are part of the tube are situated in a heat exchange chamber of the tubular boiler, which is where the heat exchange of the fluid going through the exchange tube takes place.

This exchange chamber also comprises on the inside thereof the oven situated inside the innermost helical layer of the heat exchange tube, joined to said layer in a rigid manner.

Said oven is connected to a fuel feeder situated in a space attached to the exchange chamber, but inside the boiler, which provides it with the fuel to be burned. The heat exchange between the oven and the tube is therefore more direct and efficient that if they were in separate chambers in addition to not occupying an added space, compacting the boiler into a single unit.

The fuel feeder connected to the oven and configured for supplying fuel comprises a feeder conduit which connects the outside of the tubular boiler, where a feed hopper can be situated, to the feeder and is configured for introducing fuel into said feeder from the outside of the boiler.

The fuel feeder also comprises a tank connected to the feeder conduit, where the fuel introduced into the feeder is accumulated before being introduced into the oven, a mechanism configured for introducing the fuel accumulated in the tank into the oven and a support in which the fuel feeder is held inside the boiler.

Said mechanism can be configured from different components which allow the regular inlet of fuel into the oven, such that in a preferred embodiment, the mechanism comprises a motor configured for turning a worm screw. Said worm screw is what longitudinally moves the fuel by means of the turning provided by the motor.

In a preferred embodiment, the feeder conduit is situated above the tank of the fuel feeder, in a vertical position.

The boiler also comprises an output collector for collecting ash and slag, which connects the inside of the heat exchange chamber to the outside of the boiler, wherein said ashes are collected, and a forced-air-current generator configured for generating a movement of air inside the boiler and directing said air to the oven, wherein said movement of air moves the ash and slag through the at least one layer of the heat exchange tube to the output collector.

Therefore, the forced movement of air favours not only combustion by generating the inlet of oxygen, but also the removal of ash, and the fact that said ash is not permanently deposited on the heat exchange tube, reducing the efficacy of the boiler.

In one embodiment, the oven comprises a cylindrical or conical outer shape, situated concentrically to the helical layer or layers of the heat exchange tube. This outer shape depends on the shape of the tube in the form of a helical layer, such that the oven comprises the same shape that said layer has, but of a much smaller size as it is situated on the inside thereof. The internal hollow of the oven can also have a cylindrical, conical or prismatic shape, using the shape that most favours combustion from the inlet of material and air.

The shaft of the cylindrical or conical shape of the oven, as well as its height, comprise an approximate length between a quarter and two quarter parts of the length of the layer of the tube. Much of the tube is thereby left exposed or not covered by the oven, leaving a raised contact surface of the tube where heat exchange is performed.

In one embodiment, the oven comprises conduits, which can be simple openings or tubes, connecting the inside of said oven to the current generator, with the movement of air created in the generator going through said conduits. For combustion to occur, the oven comprises at least one igniter situated in said openings which allows starting the ignition of the fuel.

The oven also comprises a fuel inlet connected to the fuel feeder, such that, in a preferred embodiment, said inlet is situated at the base of the cylindrical or conical outer shape of the oven, in a concentric manner.

In one embodiment, the fuel burned in the boiler is biomass, although any other fuel having similar characteristics not originating in a biological process can be used. Therefore, by using biomass as a fuel, the boiler is applicable to energy cogeneration systems by means utilizing residues and biomasses.

In one embodiment, the heat exchange chamber comprises a gas outlet conduit situated in an upper extreme position, preferably vertically, of the tubular boiler, to prevent gases from accumulating in said chamber.

In one embodiment, the boiler comprises a substantially cylindrical shape, is horizontally positioned, wherein the heat exchange tube comprises an inlet and an outlet for a fluid into/out of the boiler, said inlet and said outlet being arranged on a longitudinal axis of said cylindrical shape of the boiler.

Therefore, in one embodiment, the boiler is configured for turning around itself, by means of a rotary movement, about the longitudinal axis of the cylindrical shape of the boiler, such that the boiler comprises a rotor, situated on the outside of the boiler, configured for performing said rotary movement of the heat exchange tube. For the rotary movement to be produced without losses of the fluid circulating through the inside of the heat exchange tube, said tube comprises rotary joints connected at the inlet and at the outlet of said tube, on the outside of the boiler.

In one embodiment, the feeder comprises a counterweight in a lower part of said feeder, and the support consists of train rail type attachment comprising at least two parallel shafts with at least two wheels, with one wheel at each end of said shaft, the wheels being fitted in rails that are also parallel.

These rails of the support have a ring shape and are situated and rigidly joined inside the boiler, in the attached space in which the fuel feeder is located, concentrically to the cylindrical shape of said boiler.

Due to this mobile support, when the boiler turns, the fuel feeder remains immobile, the rails being removed in a circular direction, but said feeder remaining vertical due to the effect of the counterweight. That is, the attachment of the feeder to the inside of the boiler is a mobile attachment which allows the turning of one with respect to the other.

When slag from combustion is situated on the heat exchange tube, the movement of the boiler allows the slow rotary movement to cause the impurities to move along the surface of the layers of the tube like a worm screw, passing between the layer or layers forming the heat exchange tube, until ending up at the bottom of the boiler, in the output collector, to be extracted by conventional means. In the event that the tube forms several layers, the ashes make a zigzag path passing through all the layers from the innermost to the outermost one.

Since the tube is helical with the walls of the spirals joined together, the contact surface with gases is reduced, but the progressive separation of the ash residues until they fall into the lower region is allowed. Furthermore, the movement favors a similar progressive heating in all parts of the tube.

This movement of the boiler also favors combustion of the fuel as the oven moves and allows oxygen from the air current to reach all its parts, which is particularly an advantage in the case of using biomass as fuel in the oven.

The ducts, inlets, outlets and supports of the boiler do not represent an obstacle for the rotary turning of the tube, hence both the inlet and the outlet of the tube are positioned on the axis of the boiler, and the biomass feeder remains immobile, that is, the oven can turn, but the feeder is always kept in the same position, with the feeder conduit being in the vertical position, and said feeder being supported on sliding means.

Despite the rotary movement of the boiler, the fuel inlet, the output collector and the gas outlet of the boiler remain immobile as said rotary movement is not shared. That is, they remain in one and the same vertical position despite the moment of the boiler.

The performance of the boiler of the invention is superior to that of the boilers without this configuration, by having a better heat exchange. In the same manner, given that both the oven and the tube can have rotary movement, by reducing the abrasion generated on part of the coil and moving the fuel as it is being burned, the possible hours of use for the boiler increase. This is due to the fact that, usually, the gases generated in the combustion are not evenly distributed inside the boiler, especially if this is situated horizontally, in such a way that the rotary movement of the oven and of the heat exchange tube does generate a regular exchange over the entire surface thereof.

Moreover, the use of the heat exchange tube configured as a slag transfer mechanism, in addition to the energy exchange, implies an improvement with respect to the existing technology.

The heat exchange tube can work with different types of fluids such as water or industrial thermal oil, without being limited by the rotational nature thereof.

The automatic slag removal system does not require the stopping of the heat exchange process and enables the elimination of peripheral equipment intended for this use, obtaining the same result, reducing the investment costs of the boiler.

No model has been found in the background that is capable of producing the same performance as the proposed model according to the conjunction entailed by all the features exhibited by combining the oven inside a layer of the heat exchange tube, adding the centrifugal force of the rotation and the generation of the movement of air by the generator.

### BRIEF DESCRIPTION OF THE FIGURES

To complete the description of the invention, and for the purpose of helping to make the features thereof more readily understandable, according to a preferred exemplary embodiment thereof, a drawing is included wherein, by way of illustration and not limitation, the following figure has been represented:

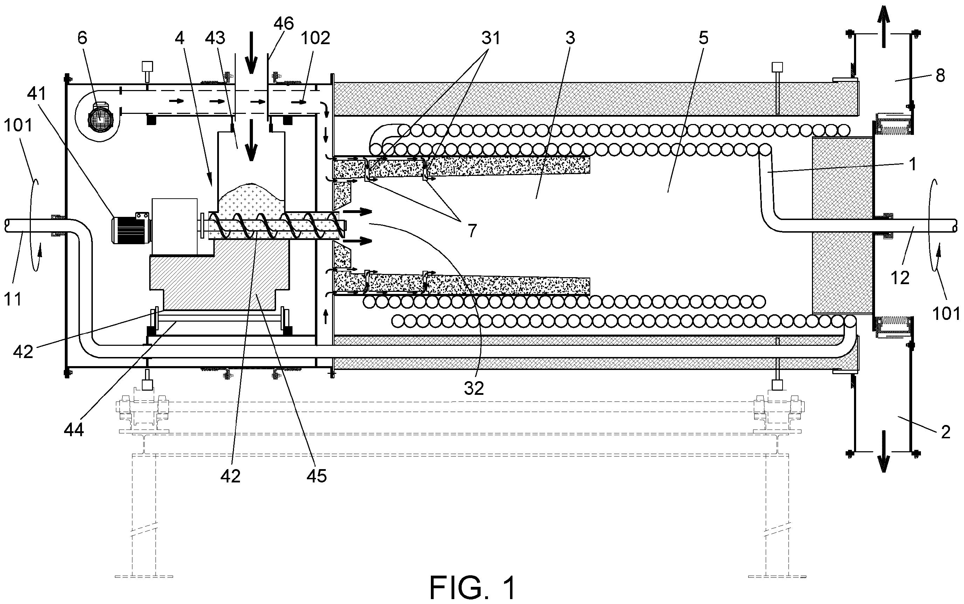

- Figure 1 depicts an elevational view of the tubular boiler which shows the heat exchange tube formed by two cylindrical and concentric layers, with the spirals joined, where the oven is located inside the innermost layer.

A list of the references used in the figures is provided below:
1) Heat exchange tube
   11) Inlet
   12) Outlet
   101) Rotary movement
   102) Movement of air
2) Output collector
3) Oven
   31) Conduits
   32) Fuel inlet
4) Feeder
   41) Motor
   42) Worm screw
   43) Tank
   44) Support
   45) Counterweight
   46) Feeder conduit
5) Heat exchange chamber
6) Current generator
7) Igniter
8) Gas outlet

### DESCRIPTION OF A PREFERRED EMBODIMENT OF THE INVENTION

The present invention relates to a horizontally oriented boiler, which uses as fuel biomass, which generates ash or slag during combustion, such that, after start-up thereof, it does not need to be stopped or intervened with for carrying out cleaning tasks.

As can be seen in Figure 1, the boiler is made up of a cylindrical helical or cylindrical coil heat exchange tube (1), forming two concentric layers, with a small separation between them, which enables there to be a heat exchange surface of the entire conduit, by means of convection, superior to single-layer coils.

The spirals of said layers are joined together, without there being openings or a separation between same. Said heat exchange tube (1) is housed in a heat exchange chamber (5) of the boiler, said chamber (5) being cylindrical, like the boiler.

One of the advantages of the invention is that the oven (3) is situated inside the innermost helical layer of the heat exchange tube (1), being rigidly joined to same, said oven (3) having an outer cylindrical shape, having a conical internal hollow and covering half the length of the helical layer of the tube (1).

Therefore, the heat exchange between the oven (3) and the exchange tube (1) is direct, does not require an attached chamber for housing said oven (3) and has a higher efficiency that if it were in an attached chamber and heat exchange was performed only by the heating of the gases generated in the combustion.

The oven (3) is connected to a fuel feeder (4) also situated inside the boiler, in a space outside the heat exchange chamber (5). Said feeder (4) comprises a feeder conduit (46), situated in the vertical position, which allows the inlet of fuel from outside the boiler into a tank (43) of said feeder (4), where the fuel is stored before being introduced by means of a mechanism into the oven (3), through the fuel inlet (32). This mechanism is formed by a motor (41) turning a worm screw (42), which moves the fuel to the fuel inlet (32), said inlet (32) being a conduit situated in a concentric position at the cylindrical base of the oven (3). The feeder (4) thereby allows fuel to pass from the outside of the boiler into the oven (3).

The boiler also comprises a current generator (6) that generates a movement of air (102) inside the boiler, which moves to the inside of the oven (3) and goes through it by means of conduits (31). These conduits consist of openings made in said oven (3) and favor oxygen reaching same until the combustion of the oven (3), but they also help move the slag and ash generated in the combustion to an output collector (2) where such waste is extracted.

Moreover, the boiler has a gas outlet (8) situated at an upper end of said boiler, configured for extracting the gases generated during combustion, and a series of igniters (7) situated in the conduits (31) configured for starting the ignition of the fuel introduced in the oven (3).

When the boiler is in operation, slow rotary movement (101) is produced, rotating the entire boiler with respect to the shaft of the cylindrical shape of said boiler, such that the elements comprised on the inside thereof such as the heat exchange tube (1) and the oven (3) are turned, but not the feeder (4), the feeder conduit (46), the gas outlet (8) and the output collector (2), which remain immobile.

For the rotary movement (101) of the tube (1) not to collide with any of the elements needed for the operation of the boiler, both the outlet (12) and the inlet (11) are situated on the central axis of said cylindrical boiler. The feeder (4) comprises a support (44) which consists of an attachment that allows the movement of said feeder (4) with respect to the boiler as it comprises two shafts with wheels at the ends thereof fitted in rails with a ring shape.

Said rails are situated concentrically to the inner part of the boiler, in the attached space in which the feeder (4) is located, and are joined by means of a series of rigid attachments which allow the heat exchange tube (1) to turn around the feeder (4). That is, it is as if the rails were located on a sleeve or internal structure of a smaller size than the internal diameter of the boiler, and said internal structure was joined to the boiler in a rigid manner at several points of its perimeter, such that the heat exchange tube (1) is situated outside that internal structure, but inside the boiler.

For the feeder (4) to remain immobile while the boiler turns, it comprises a counterweight (45) which pulls the feeder downwards due to the effect of gravity and prevents the feeder (4) from being off-centre with respect to the oven (3).

The tube (1) is thereby heated from the combustion performed in the oven (3) and by the movement of hot air (102), under forced ventilation, flowing through the layers having a concentric section, increasing the temperature of the fluid circulating on the inside of said heat exchange tube (1).

The rotary movement (101) and the movement of hot air (102) under forced ventilation generate a movement of the ash and slag from combustion, moving them through the layers having a concentric section. This slag and ash are positioned on the internal portion of the coil and move over the external surface of the heat exchange tube (1), due to the rotary movement (101), operating as a worm screw, transforming this rotary movement into translation, to be extracted through the output collector (2).

The rotary movement (101) of the heat exchange tube (1) in addition to removing the ash and slag content from the boiler, further improves the heat exchange between the chamber and the fluid that circulates inside the heat exchange tube (1) by allowing the hot air to more easily reach all the cavities of the exchange chamber (5) and increase the movement of the fluid inside the tube (1).

The rotary movement (101) of the heat exchange tube (1) is generated by a rotor situated outside the boiler, so that it is not affected by the high temperatures generated inside.

To prevent liquid from leaking out, the heat exchange tube (1) has rotary joints both at the inlet (11) and at the outlet (12) of said tube (1) of the boiler, which allow the rotary movement at the same time as the inlet and outlet of the fluid to be heated, without fluid leaking out.

The movement of air (102) generated by the forced-current generator (6) is offset and favored by a forced-draft fan positioned at the gas outlet (8) of the heat exchange chamber (5). This fan sucks in the air from inside the exchange chamber (5), improving the entrance of the movement of air (102) into the oven and generating a forced ventilation.

The present invention should not be limited to the embodiment described herein. Other configurations may be carried out by those skilled in the art based on the present description. Accordingly, the scope of the invention is defined by the following claims.

## Claims

1. A tubular heat exchange boiler comprising:
- a heat exchange tube (1) having a distribution comprising at least one helical layer;
wherein said layer comprises a set of laterally joined spirals, said layer being situated in a heat exchange chamber (5) of the tubular boiler; **characterized in that** the boiler comprises on the inside thereof:
- an oven (3) situated on an inner side of the helical layer of the heat exchange tube (1), said oven (3) being rigidly joined to said layer and connected to a fuel feeder (4);
- the fuel feeder (4) connected to the oven (3) and configured for supplying fuel to be burned;
- an output collector (2) for collecting ash and slag, which connects the inside of the heat exchange chamber (5) to the outside of the boiler; and
- a forced-air-current generator (6), configured for generating a movement of air (102) inside the boiler and directing it to the oven (3);
wherein said movement of air (102) moves the ash and slag along the at least one layer of the heat exchange tube (1) to the output collector (2).

2. The tubular heat exchange boiler according to claim 1, **wherein** the feeder (4) comprises:
- a feeder conduit (46) which connects the outside of the tubular boiler to the feeder (4) and is configured for introducing fuel into said feeder (4) from the outside of the boiler;
- a tank (43) connected to the feeder conduit (46), where the fuel introduced by said feeder conduit (46) is accumulated before being introduced into the oven (3);
- a mechanism configured for introducing the fuel accumulated in the tank (43) into the oven (3); and
- a support (44) configured for holding the fuel feeder (4) inside the boiler.

3. The tubular heat exchange boiler according to the preceding claim, **wherein** the feeder conduit (46) is situated above the tank (43) of the fuel feeder (4), in the vertical position.

4. The tubular heat exchange boiler according to claim 2 or 3, **wherein** the mechanism configured for introducing the fuel accumulated in the tank (43) into the oven (3) comprises a motor (41) configured for turning a worm screw (42).

5. The tubular heat exchange boiler according to any of the preceding claims, **wherein** the heat exchange tube (1) has a distribution comprising two or more helical layers, wherein said layers are situated in a concentric and overlapping manner.

6. The tubular heat exchange boiler according to the preceding claim, **wherein** the spirals of each helical layer of the heat exchange tube (1) present an inclination with respect to a height of said helical layer, with said inclinations alternating in each layer.

7. The tubular heat exchange boiler according to any of the preceding claims, **wherein** each helical layer of the heat exchange tube (1) has a cylindrical shape.

8. The tubular heat exchange boiler according to any of claims 1 to 6, **wherein** each helical layer of the heat exchange tube (1) has a conical shape, wherein each of the layers comprise alternating inverse tapering.

9. The tubular heat exchange boiler according to any of the preceding claims, **wherein** the oven (3) comprises a cylindrical or conical outer shape, situated concentrically to the helical layers of the heat exchange tube (1), wherein a height of the cylindrical or conical outer shape of the oven (3) is comprised between a quarter and two quarter parts of the height defining the helical layers of the heat exchange tube (1).

10. The tubular heat exchange boiler according to any of the preceding claims, **wherein** the oven (3) comprises:
- conduits (31) connecting an inner side of said oven (3) with the current generator (6), the movement of air (102) going through same;
- a fuel inlet (32) connected to the fuel feeder (4); and
- at least one igniter (7) situated in the conduits (31).

11. The tubular heat exchange boiler according to claims 9 and 10, **wherein** the fuel inlet (32) is situated concentrically to the base of the cylindrical or conical outer shape of the oven (3).

12. The tubular heat exchange boiler according to any of the preceding claims, **wherein** the fuel burned in the boiler is biomass.

13. The tubular heat exchange boiler according to any of the preceding claims, **wherein** that the heat exchange chamber (5) comprises a gas outlet conduit (8) situated in an upper extreme position of the tubular boiler.

14. The tubular heat exchange boiler according to any of the preceding claims, **wherein** the feeder (4) comprises a counterweight (45) in a lower part of said feeder (4), and in that the support (44) comprises at least two parallel shafts with at least two wheels, with one wheel at each end of said shafts, and two parallel rails configured for fitting with the wheels.

15. The tubular heat exchange boiler according to any of the preceding claims, **wherein** the boiler comprises a cylindrical shape, is horizontally positioned, wherein the heat exchange tube (1) comprises an inlet (11) and an outlet (12) for a fluid into/out of the boiler, said inlet (11) and said outlet (12) being arranged on a longitudinal axis of said cylindrical shape of the boiler.

16. The tubular heat exchange boiler according to claims 14 and 15, **wherein** the rails of the support (44) have a ring shape and are situated and rigidly joined inside the boiler, concentrically to the cylindrical shape of said boiler.

17. The tubular heat exchange boiler according to claim 15 or 16, **wherein** the boiler is configured for turning by means of a rotary movement (101) about the longitudinal axis of the cylindrical shape of the boiler.

18. The tubular heat exchange boiler according to the preceding claim, **wherein** it comprises a rotor, situated on the outside of **the** boiler, configured for performing the rotary movement (101) of the boiler (1).

19. The tubular heat exchange boiler according to claim 15, **wherein** the heat exchange tube (1) comprises rotary joints at the inlet (11) and at the outlet (12) of said tube (1), on the outside of the boiler.
